# EUROPEAN PATENT APPLICATION

(11) **EP 3 744 805 A1**
(43) Date of publication of application: **02.12.2020**
(21) Application number: 19740984.0
(22) Date of filing: 18.01.2019
(51) Int. Cl.: C09K 3/00, B32B 27/00, C08L 83/04, C08L 83/05, C08L 83/07, C09D 183/04, C09D 183/05, C09D 183/07

(54) **SOLVENT-FREE CURABLE SILICONE RELEASING AGENT COMPOSITION AND RELEASE SHEET**

(30) Priority: 22.01.2018 JP 2018007987
(71) Applicant: Shin-Etsu Chemical Co., Ltd., Tokyo 100-0004 (JP)
(72) Inventor: IHARA Toshiaki, Annaka-shi, Gunma 379-0224 (JP); KOBAYASHI Ataru, Annaka-shi, Gunma 379-0224 (JP)
(74) Representative: Mewburn Ellis LLP
(86) International application number: PCT/JP2019/001407
(87) International publication number: WO 2019/142894

(57) **Abstract**

A release sheet having excellent curability and adhesion to substrates and a very low release force at high speeds as well as at low speeds can be obtained by coating a sheet-like substrate with a solvent-free curable silicone releasing agent composition that comprises components (A) to (E), and thermally curing the same.
(A) An alkenyl group-containing organopolysiloxane that has a vinyl value of 0.016 to 0.05 mol/100 g and a kinematic viscosity of 80 to 450 mm²/s,
(B) an organohydrogenpolysiloxane having a SiH amount using formulas (1) and (2) at a mass ratio of 100:5 to 100:200 of 0.016 to 0.5 mol/100 g,

M_{α}M^{H}_{β}D^{H}_{γ}T_{δ}Q_{ε} (1),

M_{α}M^{H}_{β}D^{H}_{ζ}D_{η}T_{δ}Q_{ε} (2),

(α and β are 0 or an integer, 2 ≤ α+β, 10 ≤ γ ≤ 100, 0 ≤ δ ≤ 10, 0 ≤ ε ≤ 10, 5 ≤ ζ ≤ 60, 10 ≤ η ≤ 50, 0 ≤ δ ≤ 10, and 0 ≤ ε ≤ 10),
(C) an organopolysiloxane of formula (3),

M¹₂D_{θ} (3),

(θ is 300 to 3,000),
(D) an addition reaction controlling agent, and
(E) a catalyst for addition reaction.

## Description

### TECHNICAL FIELD

This invention relates to a solventless curable silicone release composition characterized by low release forces at low and high speeds, and more particularly, to a solventless curable silicone release composition which cures into a cured film having so low a release force that when a label is prepared by using the silicone release composition and mechanically removing matrix waste surrounding the label at high speed, the matrix waste can be smoothly removed without being caught, and a release sheet.

### BACKGROUND ART

In the prior art approach for preventing adhesion or bond between sheet-like substrates such as paper and plastic sheets and pressure-sensitive adhesives, a cured film of a silicone composition is disposed on the substrate surface to impart release properties. The following methods are known for forming a cured silicone film on the substrate surface.
(1) method for forming a releasable film through addition reaction between an alkenyl-containing organopolysiloxane and an organohydrogenpolysiloxane in the presence of a platinum base compound catalyst (Patent Document 1: JP-A S47-032072)
(2) method for forming a releasable film through condensation reaction of an organopolysiloxane having a functionality such as hydroxyl or alkoxy in the presence of an organometallic salt catalyst (Patent Document 2: JP-B S35-013709)
(3) method for forming a releasable film by effecting radical polymerization of an acrylic group-containing organopolysiloxane using a photoinitiator and UV or electron beam (Patent Document 3: JP-A S54-162787)

Among the above methods (1), (2) and (3), method (1) for forming a releasable film through addition reaction is widely utilized because it can accommodate a variety of requisite release properties covering from low-speed release to high-speed release.

The method (1) for forming a releasable film through addition reaction includes solvent type in which a silicone composition is dissolved in an organic solvent, emulsion type in which a silicone composition is dispersed in water using an emulsifier, and solventless type consisting of silicone. Since the solvent type is harmful to the human body and environment, a switchover from the solvent type to the solventless type is in progress in view of safety. The emulsion type needs enormous energy for removal of water and is difficult to reduce in release force because a noticeable amount of emulsifier is left behind.

For this reason, the solventless type is most often used. As a basic formulation, the solventless type composition is composed of a base oil (vinyl-containing siloxane), a crosslinker (SiH-containing siloxane), an inhibitor (acetylene compound), and a platinum catalyst.

In order that the solventless type composition reduce its release force on peeling at a low speed of 0.3 m/min, it is recommended that the crosslinking density (meaning the density of silethylene bonds resulting from reaction of vinyl groups with SiH groups in base oil and crosslinker) is as low as possible. The release force can be further reduced by adding non-reactive silicone oil.

While labels are recently prepared by coating a pressure-sensitive adhesive to a silicone-coated release sheet (such as release paper or release film), attaching wood-free paper thereto, and winding and removing PSA-bearing waste matrix outside labels, the matrix removal machine is improved for the purpose of saving work time and labor costs. Then the waste matrix removal is carried out at a high speed.

The release sheets (such as release paper or release film), however, have the tendency that a greater release force is necessary as the peeling speed becomes higher. In the waste matrix removal at a high speed, peeling is often disturbed, for example, the waste matrix is broken midway or tangled up. Then the operation must be interrupted.

Under these circumstances, intending to enable high-speed light-force peeling, Patent Document 4: JP-B H03-052498 proposes a composition having a phenyl-containing non-functional organopolysiloxane added thereto. The releasable film-forming composition having the phenyl-containing non-functional organopolysiloxane added thereto is effective for reducing the release force both at high speed and low speed, but allows the non-functional organopolysiloxane to bleed out so that the residual adhesion rate is substantially reduced. Also the phenyl-containing non-functional organopolysiloxane alone cannot accommodate the current waste matrix removal step at a higher peeling speed because of too great a release force.

There are known other reports including Patent Document 5: JP-B H07-091518, Patent Document 6: JP 3198926, Patent Document 7: JP-A 2003-003183, and Patent Document 8: JP 2946963.

JP-B H07-091518 discloses a composition comprising component (A): terminal alkenyl group-containing branched organopolysiloxane, component (B): organohydrogenpolysiloxane, and component (C): platinum base catalyst. Allegedly, since less reactive groups are left unreacted, stability is improved and a satisfactory release force is available for a long period of time. In Examples, the high-speed (50 m/min) release force is 58 gf/50 mm at the lowest. A still lower release force is desirable.

JP 3198926 discloses a solventless curable silicone release composition essentially comprising a branched organopolysiloxane having 1.5 to 3 alkenyl groups, an organohydrogenpolysiloxane, and a platinum catalyst. The high speed release force is 150 g/50 mm or more. It is necessary to further reduce the release force.

JP-A 2003-003183 discloses a solvent type silicone composition for release agents comprising (A) an alkenyl-containing branched organopolysiloxane, (B) an organohydrogenpolysiloxane, (C) a platinum catalyst, (D) an addition reaction inhibitor, and (E) an organic solvent. Because of the solvent-type silicone composition for release liners, the high-speed (60 m/min) release force is as high as 2.6 to 5 N/50 mm.

JP 2946963 discloses a releasable film-forming silicone composition comprising (A) a diorganopolysiloxane containing 0.5 to 10 mol% of alkenyl groups per molecule and having a viscosity as 30 wt% toluene solution of at least 1,000 cp, (B) a dimethylpolysiloxane containing a hydroxyl group and having a viscosity of at least 100,000 cp, (C) an organohydrogenpolysiloxane, and (D) a platinum compound. The release force at 60 m/min is 70 to 80 m/min. It is necessary to further reduce the release force.

### PRIOR ART DOCUMENTS

### PATENT DOCUMENTS

Patent Document 1: JP-A S47-032072
Patent Document 2: JP-B S35-013709
Patent Document 3: JP-A S54-162787
Patent Document 4: JP-B H03-052498
Patent Document 5: JP-B H07-091518
Patent Document 6: JP 3198926
Patent Document 7: JP-A 2003-003183
Patent Document 8: JP 2946963

### SUMMARY OF THE INVENTION

### TECHNICAL PROBLEM

An object of the invention, which has been made under the above-mentioned circumstances, is to provide a solventless curable silicone release composition capable of forming a release sheet having a very low release force not only at low speed, but also at high speed, and a release sheet comprising a cured film of the composition.

### SOLUTION TO THE PROBLEM

Making extensive investigations to attain the above object, the inventors have found that when a solventless curable silicone release composition comprising at least components (A), (B), (C), (D) and (E), defined below, in specific amounts, is coated onto a sheet-like substrate such as paper and plastic film and heat cured, curability and substrate adhesion are improved and the resulting release sheet has a very low release force not only at low speed, but also at high speed. The invention is predicated on this finding.

Accordingly, the invention provides a solventless curable silicone release composition and a release sheet as defined below.
[1] A solventless curable silicone release composition comprising at least components (A), (B), (C), (D), and (E):
   (A) 100 parts by weight of an organopolysiloxane containing at least two alkenyl groups per molecule and having a vinyl value of 0.016 mol/100 g to 0.05 mol/100 g and a kinematic viscosity at 25°C of 80 mm²/s to 450 mm²/s,
   (B) 2 to 8 parts by weight of an organohydrogenpolysiloxane mixture of (B-1) an organohydrogenpolysiloxane having the average compositional formula (1) and (B-2) an organohydrogenpolysiloxane having the average compositional formula (2) in a weight ratio (B-1):(B-2) of from 100:5 to 100:200, the mixture containing 0.016 mol/100 g to 0.5 mol/100 g of silicon-bonded hydrogen,

      M_{α}M^{H}_{β}D^{H}_{γ}T_{δ}Q_{ε} (1)

      wherein M is R₃SiO_{1/2}, M^{H} is R₂HSiO_{1/2}, D^{H} is RHSiO_{2/2}, T is RSiO_{3/2}, Q is SiO_{4/2}, R is each independently a C₁-C₁₂ substituted or unsubstituted monovalent hydrocarbon group free of aliphatic unsaturation, α and β are each independently 0 or a positive number, 2 ≤ α+β, γ, δ, and ε are numbers in the range: 10 ≤ γ ≤ 100, 0 ≤ δ ≤ 10, and 0 ≤ ε ≤ 10,

      M_{α}M^{H}_{β}D^{H}_{ζ}D_{η}T_{δ}Q_{ε} (2)

      wherein M is R₃SiO_{1/2}, M^{H} is R₂HSiO_{1/2}, D^{H} is RHSiO_{2/2}, D is R₂SiO_{2/2}, T is RSiO_{3/2}, Q is SiO_{4/2}, R is each independently a C₁-C₁₂ substituted or unsubstituted monovalent hydrocarbon group free of aliphatic unsaturation, α and β are each independently 0 or a positive number, 2 ≤ α+β, ζ, η, δ, and ε are numbers in the range: 5 ≤ ζ ≤ 60, 10 ≤ η ≤ 50, 0 ≤ δ ≤ 10, and 0 ≤ ε ≤ 10,
   (C) 0.1 to 20 parts by weight of a high-molecular-weight linear organopolysiloxane having the general formula (3):

      M¹₂D_{θ} (3)

      wherein M¹ is R¹₃SiO_{1/2}, D is R₂SiO_{2/2}, R is each independently a C₁-C₁₂ substituted or unsubstituted monovalent hydrocarbon group free of aliphatic unsaturation, R¹ is a C₁-C₁₂ substituted or unsubstituted monovalent hydrocarbon group free of aliphatic unsaturation or a hydroxyl group, θ is a positive number of 300 to 3,000,
   (D) an effective amount of an addition reaction inhibitor, and
   (E) an effective amount of an addition reaction catalyst.
[2] The solventless curable silicone release composition of [1] wherein component (A) is an organopolysiloxane having the average compositional formula (4):

   M_{ι}M^{Vi}_{κ}D_{λ}D^{Vi}_{µ} (4)

   wherein M is R₃SiO_{1/2}, M^{Vi} is R₂PSiO_{1/2}, D is R₂SiO_{2/2}, D^{Vi} is RPSiO_{2/2}, R is each independently a C₁-C₁₂ substituted or unsubstituted monovalent hydrocarbon group free of aliphatic unsaturation, P is an alkenyl group of the formula: -(CH₂)ₐ-CH=CH₂ wherein a is an integer of 0 to 6, ι, κ, λ, and µ are numbers in the range: 0 ≤ t ≤ 2, 0 ≤ κ ≤ 2, ι+κ = 2, 10 ≤ λ ≤ 300, and 0 ≤ µ ≤ 10.
[3] The solventless curable silicone release composition of [1] or [2] wherein component (B-1) is an organohydrogenpolysiloxane having the average compositional formula (5):

   M_{α}M^{H}_{β}D^{H}_{γ} (5)

   wherein M is R₃SiO_{1/2}, M^{H} is R₂HSiO_{1/2}, D^{H} is RHSiO_{2/2}, R is each independently a C₁-C₁₂ substituted or unsubstituted monovalent hydrocarbon group free of aliphatic unsaturation, α and β are each independently 0 or a positive number, 2 ≤ α+β, γ is a positive number in the range: 10 ≤ γ ≤ 100, and component (B-2) is an organohydrogenpolysiloxane having the average compositional formula (6):

   M_{α}M^{H}_{β}D^{H}_{ζ}D_{η} (6)

   wherein M is R₃SiO_{1/2}, M^{H} is R₂HSiO_{1/2}, D^{H} is RHSiO_{2/2}, D is R₂SiO_{2/2}, R is each independently a C₁-C₁₂ substituted or unsubstituted monovalent hydrocarbon group free of aliphatic unsaturation, α and β are each independently 0 or a positive number, 2 ≤ α+β, ζ and η are positive numbers in the range: 5 ≤ ζ ≤ 60 and 10 ≤ η ≤ 50.
[4] The solventless curable silicone release composition of any one of [1] to [3], further comprising (F) an aryl-containing organopolysiloxane having the general formula (8) in an amount of 0.1 to 5 parts by weight per 100 parts by weight of component (A), 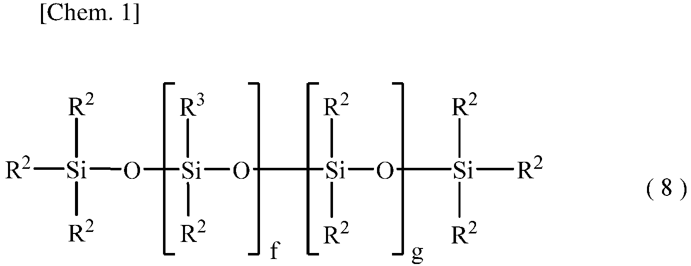 wherein R² is each independently a C₁-C₁₂ substituted or unsubstituted, aliphatically saturated monovalent hydrocarbon group, R³ is an aryl group, f is an integer of 1 to 30, g is an integer of 5 to 400, and R³/(R²+R³) is 1 to 25 mol%.
[5] The solventless curable silicone release composition of any one of [1] to [4] wherein a sample of 5 cm × 23 cm which is prepared by coating the composition onto a polyethylene laminated paper sheet in a coating weight of 0.8 to 1.2 g/m², heat curing the composition at 140°C for 30 seconds to form a cured film of the composition, coating an emulsion type acrylic adhesive PW-6111A as a pressure-sensitive adhesive to the surface of the cured film, drying the adhesive at 100°C for 180 seconds, and attaching a woodfree paper sheet thereto, shows a low-speed release force (0.3 m/min, 180° peel) of 0.01 to 0.2 N/5 cm and a high-speed release force (60 m/min, 180° peel) of 0.1 to 0.5 N/5 cm after the sample is aged at 25°C for 20 hours.
[6] A release sheet comprising a sheet-like substrate and a cured film of the solventless curable silicone release composition of any one of [1] to [5] disposed on one surface of the substrate.

### ADVANTAGEOUS EFFECTS OF THE INVENTION

The solventless curable silicone release composition of the invention is improved in curability and substrate adhesion when it is coated onto a sheet-like substrate such as paper and plastic film and cured. The coating is reduced in low-speed release force and high-speed release force, and a satisfactory release sheet is obtained. As used herein, the term "high-speed release force" means to peel at a speed of at least 30 m/min.

### DESCRIPTION OF EMBODIMENTS

Now the invention is described in detail.

### Component (A)

Component (A) is an organopolysiloxane containing at least two, preferably 2 to 12 alkenyl groups per molecule and having a vinyl value of 0.016 mol/100 g to 0.05 mol/100 g and a kinematic viscosity at 25°C of 80 mm²/s to 450 mm²/s. Component (A) may be used alone or in a combination of two or more. On use of a combination of two or more, a mixture of two or more organopolysiloxanes having a vinyl value and kinematic viscosity in the above ranges is acceptable.

Component (A) should have a vinyl value of from 0.016 mol/100 g to 0.05 mol/100 g, preferably from 0.0165 mol/100 g to 0.049 mol/100 g. If the vinyl value is less than 0.016 mol/100 g, the cured film after reaction has too low a crosslinking density, indicating that the cured film becomes soft and is increased in high-speed release force. If the vinyl value exceeds 0.05 mol/100 g, the cured film after reaction has too high a crosslinking density and is increased in low-speed release force.

Component (A) should have a kinematic viscosity at 25°C of 80 mm²/s to 450 mm²/s, preferably 100 mm²/s to 400 mm²/s, more preferably 150 mm²/s to 350 mm²/s. If the kinematic viscosity is less than 80 mm²/s, component (A) becomes more wettable and spreadable, resulting in an insufficient coating weight on the substrate surface. Inversely, if the kinematic viscosity is more than 450 mm²/s, component (A) becomes least wettable and spreadable, and the coating on the substrate widely varies. It is noted that the kinematic viscosity can be measured by an Ostwald viscometer (the same holds true, hereinafter).

The organopolysiloxane containing at least two alkenyl groups per molecule may be straight or branched. The preferred structure is an organopolysiloxane having the average compositional formula (7):

M_{ι}M^{Vi}_{κ}D_{λ}D^{vi}_{µ}T_{ν}Q_{ξ} (7)

wherein M is R₃SiO_{1/2}, M^{Vi} is R₂PSiO_{1/2}, D is R₂SiO_{2/2}, D^{Vi} is RPSiO_{2/2}, T is RSiO_{3/2}, Q is SiO_{4/2}, R is each independently a C₁-C₁₂ substituted or unsubstituted monovalent hydrocarbon group free of aliphatic unsaturation, P is an alkenyl group of the formula: -(CH₂)ₐ-CH=CH₂ wherein a is an integer of 0 to 6, ι, κ, λ, µ, ν and ξ are numbers in the range: 0 ≤ ι ≤ 12, 0 ≤ κ ≤ 12, 2 ≤ ι+κ, 10 ≤ λ ≤ 300, 0 ≤ µ ≤ 10, 2 ≤ κ+µ ≤ 12, 0 ≤ ν ≤ 10, and 0 ≤ ξ ≤ 5.

More preferred is an organopolysiloxane having the average compositional formula (4):

M_{ι}M^{Vi}_{κ}D_{λ}D^{Vi}_{µ} (4)

wherein M is R₃SiO_{1/2}, M^{Vi} is R₂PSiO_{1/2}, D is R₂SiO_{2/2}, D^{Vi} is RPSiO_{2/2}, R is each independently a C₁-C₁₂ substituted or unsubstituted monovalent hydrocarbon group free of aliphatic unsaturation, P is an alkenyl group of the formula: -(CH₂)ₐ-CH=CH₂ wherein a is an integer of 0 to 6, ι, κ, λ, and µ are numbers in the range: 0 ≤ t ≤ 2, 0 ≤ κ ≤ 2, ι+κ = 2, 10 ≤ λ ≤ 300, and 0 ≤ µ ≤ 10.

In formulae (7) and (4), R is each independently a substituted or unsubstituted monovalent hydrocarbon group of 1 to 12 carbon atoms, preferably 1 to 10 carbon atoms, more preferably 1 to 8 carbon atoms, free of aliphatic unsaturation. Examples include alkyl groups such as methyl, ethyl, propyl, butyl and octyl, cycloalkyl groups such as cyclohexyl, aryl groups such as phenyl and tolyl, aralkyl groups such as benzyl and phenethyl, and substituted forms of the foregoing in which some or all hydrogen atoms are substituted by halogen atoms, typically halogenated alkyl groups such as chloropropyl and trifluoropropyl. Preferably methyl accounts for at least 80 mol% of R in view of curability of the composition and a low release force of the cured product.

P is an alkenyl group of the formula: -(CH₂)ₐ-CH=CH₂ wherein a is an integer of 0 to 6, examples of which include vinyl, allyl, butenyl, propenyl, 5-hexenyl, octenyl, and decenyl, with vinyl being preferred.

In formula (7), t, κ, λ, µ, ν, and ξ are numbers in the range: 0 ≤ ι ≤ 12, preferably 0 ≤ ι ≤ 6, 0 ≤ κ ≤ 12, preferably 0 ≤ κ ≤ 6, 2 ≤ _{ι+κ}, preferably 2 ≤ _{ι+κ} ≤ 18, 10 ≤ λ ≤ 300, preferably 20 ≤ λ ≤ 280, more preferably 50 ≤ λ ≤ 250, 0 ≤ µ ≤ 10, preferably 0 ≤ µ ≤ 5, 2 ≤ κ+µ ≤ 12, preferably 2 ≤ κ+µ ≤ 10, 0 ≤ ν ≤ 10, preferably 0 ≤ ν ≤ 3, and 0 ≤ ξ ≤ 5, preferably 0 ≤ ξ ≤ 3.

In formula (4), t, κ, λ, and µ are in the same range as t, κ, λ, and µ in formula (7).

In formulae (7) and (4), λ is a positive number from 10 to 300, preferably from 20 to 280, more preferably from 50 to 250. If λ is less than 10, the crosslinking density becomes too high so that the cured film may have a high hardness and show an increased release force in a low-speed peel test. If λ exceeds 300, the organopolysiloxane and hence, the solventless curable silicone release composition may have too high a viscosity and become inefficient to coat.

In formulae (7) and (4), µ is a number from 0 to 10, preferably from 0 to 5. If µ exceeds 10, the crosslinking density becomes too high so that the cured film may have a high hardness and show an increased release force in a low-speed peel test.

In formula (7), v is a number from 0 to 10, preferably from 0 to 3. If v exceeds 10, the crosslinking density becomes too high so that the cured film may have a high hardness and show an increased release force in a low-speed peel test.

In formula (7), ξ is a number from 0 to 5, preferably from 0 to 3. If ξ exceeds 5, the organopolysiloxane and hence, the solventless curable silicone release composition may have too high a viscosity and become inefficient to coat.

Illustrative structures of formula (7) include M^{Vi}₂D^{Vi}₁₂D₂₅₀, M^{Vi}₃D^{Vi}₁₂D₂₅₀T₁, M^{Vi}₄D₂₅₀Q₁, M^{Vi}₂D^{Vi}₄D₁₀₀, M₃M^{Vi}₃D₂₅₀T₄, M₂D^{Vi}₅D₈₀, M^{Vi}₂D₁₅₀, M^{Vi}₂D₇₀ wherein M, M^{Vi}, D, D^{Vi}, T and Q are as defined above, hereinafter, but are not limited thereto.

### Component (B)

Component (B) is an organohydrogenpolysiloxane mixture of (B-1) an organohydrogenpolysiloxane having the average compositional formula (1) and (B-2) an organohydrogenpolysiloxane having the average compositional formula (2) in a weight ratio (B-1):(B-2) of from 100:5 to 100:200, the mixture containing 0.016 mol/100 g to 0.5 mol/100 g of silicon-bonded hydrogen.

M_{α}M^{H}_{β}D^{H}_{γ}T_{δ}Q_{ε} (1)

Herein M is R₃SiO_{1/2}, M^{H} is R₂HSiO_{1/2}, D^{H} is RHSiO_{2/2}, T is RSiO_{3/2}, Q is SiO_{4/2}, R is each independently a C₁-C₁₂ substituted or unsubstituted monovalent hydrocarbon group free of aliphatic unsaturation, α and β are each independently 0 or a positive number, 2 ≤ α+β, γ, δ, and ε are numbers in the range: 10 ≤ γ ≤ 100, 0 ≤ δ ≤ 10, and 0 ≤ ε ≤ 10.

M_{α}M^{H}_{β}D^{H}_{ζ}D_{η}T_{δ}Q_{ε} (2)

Herein M is R₃SiO_{1/2}, M^{H} is R₂HSiO_{1/2}, D^{H} is RHSiO_{2/2}, D is R₂SiO_{2/2}, T is RSiO_{3/2}, Q is SiO_{4/2}, R is each independently a C₁-C₁₂ substituted or unsubstituted monovalent hydrocarbon group free of aliphatic unsaturation, α and β are each independently 0 or a positive number, 2 ≤ α+β, ζ, η, δ, and ε are numbers in the range: 5 ≤ ζ ≤ 60, 10 ≤ η ≤ 50, 0.1 ≤ ζ/η ≤ 5, 0 ≤ δ ≤ 10, and 0 ≤ ε ≤ 10.

In formulae (1) and (2), examples of R are as exemplified above for R in the formulae (7) and (4). R is preferably of 1 to 8 carbon atoms, and especially methyl accounts for at least 80 mol% of R.

In formulae (1) and (2), α and β are each independently 0 or a positive number, preferably α is from 0 to 12, and β is from 0 to 12, and the sum is a positive number: 2 ≤ α+β, preferably 2 ≤ α+β ≤ 12; γ is a positive number in the range: 10 ≤ γ ≤ 100, preferably 20 ≤ γ ≤ 80, δ is a number in the range: 0 ≤ δ ≤ 10, preferably 0 ≤ δ ≤ 6, and ε is a number in the range: 0 ≤ ε ≤ 10, preferably 0 ≤ ε ≤ 5; ζ is a positive number in the range: 5 ≤ ζ ≤ 60, preferably 10 ≤ ζ ≤ 50, η is a positive number in the range: 10 ≤ η ≤ 50, preferably 20 ≤ η ≤ 50, and the quotient is a positive number: 0.1 ≤ ζ/η ≤ 5, preferably 0.2 ≤ ζ/η ≤ 2.5.

In formula (1), γ is a positive number in the range: 10 ≤ γ ≤ 100. A compound of formula (1) wherein γ is less than 10 is volatile and will volatilize off in a dryer. A compound of formula (1) wherein γ exceeds 100 is difficult to synthesize.

The organohydrogenpolysiloxane having formula (1) as component (B-1) is a component which is effective for adhesion to substrates and the organohydrogenpolysiloxane having formula (2) as component (B-2) is so fast reactive with alkenyl groups as to promote cure. Thus both adhesion and cure effects can be met by balancing the amounts of components (B-1) and (B-2).

Component (B-2) is so reactive that the crosslinking density may be increased. This makes a surface layer of the cured film hard to reduce the high-speed release force.

Preferably component (B-1) is an organohydrogenpolysiloxane having the average compositional formula (5):

M_{α}M^{H}_{β}D^{H}_{γ} (5)

wherein M, M^{H}, D^{H}, α, β and γ are as defined above.

Illustrative structures of component (B-1) include M₂D^{H}₁₅, M₂D^{H}₈₀, M₃D^{H}₈₀T₁, M₄D^{H}₉₀T₂, M₄D^{H}₈₀Q₁, and M^{H}₂D^{H}₈₀ wherein M, M^{H}, D^{H}, T and Q are as defined above, but are not limited thereto.

Preferably component (B-2) is an organohydrogenpolysiloxane having the average compositional formula (6):

M_{α}M^{H}_{β}D^{H}_{ζ}D_{η} (6)

wherein M, M^{H}, D^{H}, D, α, β, ζ and η are as defined above.

Illustrative structures of component (B-2) include M₂D^{H}₅D₁₀, M₂D^{H}₅₀D₂₀, M₃D^{H}₆₀D₂₀T₁, M₄D^{H}₆₀D₃₀T₂, M₄D^{H}₆₀D₂₀Q₁, and M^{H}₂D^{H}₄₀D₄₀ wherein M, M^{H}, D, D^{H}, T and Q are as defined above, but are not limited thereto.

The organohydrogenpolysiloxane (B-1) and the organohydrogenpolysiloxane (B-2) are combined in a weight ratio (B-1):(B-2) of from 100:5 to 100:200, preferably from 100:20 to 100:150. If component (B-1) is too less, the substrate adhesion is aggravated, or exfoliation occurs with a lapse of time. If component (B-1) is too much, the reaction is retarded and the high-speed release force is increased.

Component (B), i.e. the mixture of components (B-1) and (B-2) should contain 0.016 mol/100 g to 0.5 mol/100 g, preferably 0.018 mol/100 g to 0.1 mol/100 g of silicon-bonded hydrogen atoms (SiH groups). A too small SiH amount adversely affects curability and adhesion whereas an excessive SiH amount causes an increase of low-speed release force.

Component (B), i.e. the mixture of components (B-1) and (B-2) is used in an amount of 2 to 8 parts by weight, preferably 2 to 6 parts by weight per 100 parts by weight of component (A). A less amount of component (B) adversely affects curability and adhesion and causes an increase of high-speed release force whereas a larger amount causes an increase of low-speed release force.

In the practice of the invention, the composition preferably contains 1 to 3 moles, more preferably 1.2 to 2.4 moles of silicon-bonded hydrogen atoms (SiH groups) per mole of alkenyl groups.

### Component (C)

Component (C) is high-molecular-weight linear organopolysiloxane having the general formula (3):

M¹₂D_{θ} (3)

wherein M¹ is R¹₃SiO_{1/2}, D is R₂SiO_{2/2}, R is as defined above, R¹ is a C₁-C₁₂ substituted or unsubstituted monovalent hydrocarbon group free of aliphatic unsaturation or a hydroxyl group, and θ is a positive number of 300 to 3,000.

In formula (3), examples of R are as exemplified above for R in formulae (7) and (4). R is preferably of 1 to 8 carbon atoms, and especially methyl accounts for at least 80 mol% of R. R¹ is a C₁-C₁₂ substituted or unsubstituted monovalent hydrocarbon group free of aliphatic unsaturation or a hydroxyl group. Examples of the C₁-C₁₂ substituted or unsubstituted monovalent hydrocarbon group free of aliphatic unsaturation are as exemplified above for R in formulae (7) and (4). R¹ is preferably methyl or hydroxyl.

In formula (3), θ is a positive number of 300 to 3,000, preferably 300 to 2,000. A compound of formula (3) wherein θ is less than 300 tends to be a migration component because of a low molecular weight, so that the residual adhesion rate is aggravated or reduced, and a label peeled from the release liner is reduced in adhesive force. Inversely, a compound of formula (3) wherein θ exceeds 3,000 has a high viscosity and takes a time until it is dissolved in other components, for example, components (A), (B) and components (D), (E) to be described later, and the final composition obtained by mixing them has so high a viscosity that the coating weight varies locally and high-speed coating is accompanied by a large volume of mist.

Once component (C) is blended, it is kept entangled in a coating having a moderate crosslinking density. There is formed a surface layer having a low coefficient of friction despite a low content of migration component.

Component (C) is blended in an amount of 0.1 to 20 parts by weight, preferably 1 to 10 parts by weight per 100 parts by weight of component (A). A less amount of component (C) leads to a high coefficient of dynamic friction, poor slippage, and an increase of high-speed release force whereas an excessive amount leads to a high kinematic viscosity and difficulty of handling.

### (D) Addition reaction inhibitor

Component (D) is an addition reaction inhibitor, which serves to control the activity of the platinum group metal base catalyst. Included are organonitrogen compounds, organophosphorus compounds, acetylene compounds, oxime compounds, and organic chlorine compounds. Examples include acetylene alcohols such as 1-ethynyl-1-cyclohexanol, 3-methyl-1-butyn-3-ol, 3,5-dimethyl-1-hexyn-3-ol, 3-methyl-1-pentyn-3-ol, and phenylbutynol, acetylene compounds such as 3-methyl-3-1-pent-1-yne and 3,5-dimethyl-1- hexyn-3-yne, the reaction products of acetylene compounds with alkoxysilanes, siloxanes, hydrogensilanes or siloxanes, e.g. 1,1-dimethylpropynyloxytrimethylsilane, vinylsiloxanes such as cyclic tetramethylvinylsiloxane, organonitrogen compounds such as benzotriazole, other organophosphorus compounds, oxime compounds, and organic chromium compounds.

The addition reaction inhibitor (D) is blended in an amount sufficient to provide satisfactory stability to a processing bath and typically 0.01 to 5 parts by weight, preferably 0.1 to 3 parts by weight per 100 parts by weight of component (A).

### (E) Addition reaction catalyst

Component (E) is an addition reaction catalyst for promoting the addition reaction between components (A) and (B). It may be any of catalysts well known in the art as promoting the hydrosilylation reaction. Platinum group metal base catalysts may be used as the addition reaction catalyst. Suitable platinum group metal base catalysts include, for example, platinum, palladium and rhodium base catalysts, with the platinum base catalysts being preferred for high reactivity. Examples of the platinum base catalyst include chloroplatinic acid, alcohol or aldehyde solutions of chloroplatinic acid, and complexes of chloroplatinic acid with various olefins or vinylsiloxanes.

The amount of component (E) may be a catalytic amount. It is preferred from the standpoints of forming a satisfactory cured film and economy to use component (E) in an amount to give 1 to 1,000 ppm of platinum group metal based on the total weight of components (A) to (D).

### Optional components

While the solventless curable silicone release composition of the invention is obtained by mixing the predetermined amounts of the foregoing components (A) to (E), any optional components may be added thereto if necessary as long as the objects and benefits of the invention are not impaired. Any well-known additives which are commonly used in silicone release compositions may be added in standard amounts. Although the solventless curable silicone release composition of the invention is designed as a solventless system in view of safety to the environment, its characteristics are not degraded even when it is diluted with an organic solvent.

As the optional component, for example, any of aryl-containing organopolysiloxanes, as defined below, silicone resins, silica, low-molecular-weight organopolysiloxanes having neither silicon-bonded hydrogen nor alkenyl, and alkenyl-containing branched organopolysiloxanes may be added for the purpose of adjusting release force. In the case of high-speed coating, a mist suppressant is preferably blended. The amounts of optional components may be standard amounts not to interfere with the benefits of the invention.

Component (F) is an aryl-containing organopolysiloxane, preferably having the general formula (8). 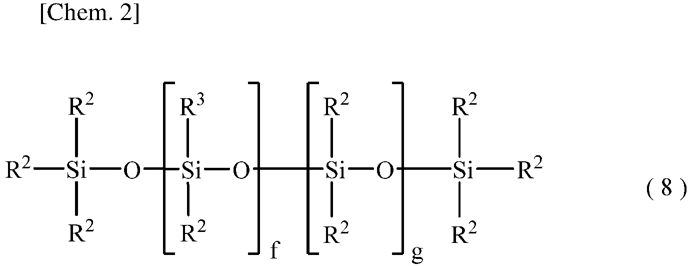 Herein R² is each independently a C₁-C₁₂ substituted or unsubstituted, aliphatically saturated monovalent hydrocarbon group, R³ is an aryl group, f is an integer of 1 to 30, g is an integer of 5 to 400, and R³/(R²+R³) is 1 to 25 mol%.

In formula (8), R² is each independently a C₁-C₁₂ substituted or unsubstituted, aliphatically saturated monovalent hydrocarbon group, examples of which include alkyl groups such as methyl, ethyl, propyl, butyl and octyl, cycloalkyl groups such as cyclohexyl, and substituted forms of the foregoing in which some or all hydrogen atoms are substituted by halogen or the like, typically halogenated alkyl groups such as chloropropyl and trifluoropropyl. Of these, methyl is preferred.

R³ is an aryl group, preferably of 6 to 12 carbon atoms such as phenyl, tolyl, xylyl or naphthyl, with phenyl being most preferred.

The subscript f is an integer of 1 to 30, preferably 5 to 25, g is an integer of 5 to 400, preferably 100 to 400, and R³/(R²+R³) is 1 to 25 mol%, preferably 1 to 10 mol%.

When used, the amount of aryl-containing organopolysiloxane (F) added is preferably 0.1 to 5 parts by weight, more preferably 0.3 to 3 parts by weight per 100 parts by weight of component (A).

### Preparation

The solventless curable silicone release composition of the invention is prepared, preferably by premixing the foregoing components (A), (B), (C), (D) and optional components until uniform, and adding component (E) to the premix. Each component may be used alone or in admixture of two or more species.

The solventless curable silicone release composition preferably has a kinematic viscosity at 25°C of 100 to 500 mm²/s, more preferably 200 to 400 mm²/s. If the kinematic viscosity is too low, the coating weight may be reduced. If the kinematic viscosity is too high, the difference in coating weight between different sites may become significant.

### Application and usage

The solventless curable silicone release composition thus prepared is coated onto a sheet-like substrate such as paper or plastic film by means of a coating roll or the like, and heat cured in a standard way. The sheet-like substrate having a cured film of the solventless curable silicone release composition disposed on one side is advantageously used as a release sheet. Exemplary plastic films include polyethylene, polypropylene, and polyethylene terephthalate.

The solventless curable silicone release composition is uniformly coated onto the surface of the substrate and heat cured. The coating weight may be sufficient to form a cured film on the substrate surface and is, for example, about 0.1 to 5.0 g/m². A too much coating weight may invite a decline of release properties. The heat curing conditions may be selected from the range of about 100°C and about 60 seconds to about 200°C and about 2 seconds although the temperature varies with the type of substrate and coating weight.

In one embodiment of the invention, a sample of 5 cm × 23 cm is prepared by coating the solventless curable silicone release composition onto a polyethylene-laminated paper sheet in a coating weight of 0.8 to 1.2 g/m², heat curing the composition at 140°C for 30 seconds to form a cured film of the silicone composition, coating an emulsion type acrylic adhesive (BPW-6111A by Toyo Ink Co., Ltd.) as a pressure-sensitive adhesive to the surface of the cured film, drying the adhesive at 100°C for 180 seconds, and attaching a woodfree paper sheet thereto. After the sample is aged at 25°C for 20 hours, it preferably shows a low-speed release force (0.3 m/min, 180° peel) of 0.01 to 0.2 N/5 cm, especially 0.05 to 0.2 N/5 cm and a high-speed release force (60 m/min, 180° peel) of 0.1 to 0.5 N/5 cm, especially 0.2 to 0.5 N/5 cm. It is noted that the low-speed release force can be measured by a tensile tester (model AGS-50G by Shimadzu Corp.), and the high-speed release force can be measured by a high-speed peeling tester (high-speed peeling tester by Tester Sangyo Co., Ltd.).

### EXAMPLES

Examples and Comparative Examples are given below for further illustrating the invention although the invention is not limited thereto. It is noted that the kinematic viscosity is measured at 25°C by an Ostwald viscometer.

The silicone release compositions or the cured products thereof were evaluated for release forces at low and high speeds, for residual adhesion rate, coefficient of dynamic friction, adhesion, and pot life by the following methods. All the silicone release compositions were cured without encountering any problems.

### Release force

### Low-speed release force test

The silicone release composition was coated onto the metal roller of a RI tester (IHI Machinery and Furnace Co., Ltd). The metal roller was brought in contact with a rubber roller and rotated for 40 seconds to transfer the silicone release composition to the rubber roller uniformly and in turn, the composition is transferred from the rubber roller to a polyethylene laminated paper. The coating weight of the silicone release composition on the polyethylene laminated paper was 1.0 g/m². The polyethylene laminated paper having the silicone release composition transferred thereon was heated in a hot-air dryer at 140°C for 30 seconds, completing a release sheet having a cured silicone film with a coating weight of 1.0 g/m². The release sheet in this state was aged at 25°C for one day, after which an emulsion type acrylic adhesive BPW-6111A (Toyo Ink Co., Ltd.) as a pressure-sensitive adhesive was coated onto the cured silicone film surface of the release sheet and dried at 100°C for 180 seconds. Next, a wood-free paper sheet was attached to the PSA surface, which was cut to a size of 5 cm × 23 cm and press bonded by rolling back and forth a roller of 2 kg, obtaining a sample. The sample was aged at 25°C for 20-24 hours. Thereafter, an end portion of the sample was detached, and the end of the PSA-coated wood-free paper sheet was pulled back at an angle of 180° relative to the polyethylene laminated paper as the substrate and at a peeling speed of 0.3 m/min, during which the force (N/50 mm) required for peeling was measured by a tensile tester (model AGS-50G by Shimadzu Corp.) and reported as a release force.

### High-speed release force test

A sample was formed by attaching a wood-free paper sheet, cutting to a size of 5 cm × 23 cm and rolling back and forth a roller of 2 kg for press bonding as in the low-speed release force test. The sample was aged at 25°C for 20-24 hours. Thereafter, an end portion of the sample was detached, and the end of the PSA-coated wood-free paper sheet was pulled back at an angle of 180° relative to the polyethylene laminated paper as the substrate and at a peeling speed of 60 m/min, during which the force (N/50 mm) required for peeling was measured by a high-speed peeling tester (high-speed peeling tester by Tester Sangyo Co., Ltd.) and reported as a release force.

### Residual adhesion rate

As in the release force test, a release sheet was prepared by forming a cured silicone film in a coating weight of 1.0 g/m² on a polyethylene laminated paper. The release sheet was aged at 25°C for one day. A polyester pressure-sensitive adhesive (PSA) tape No. 31B (Nitto Denko Corp., referred to as 31B tape, hereinafter) was attached to the cured silicone film surface of the release sheet and press bonded under a pressure of 20 g/cm² for 20 hours in a dryer at 70°C.

Then the 31B tape was peeled, and attached to a stainless steel (SUS 304) plate. The assembly was pressed by rolling back and forth a roller of 2 kg, and allowed to stand for 30 minutes. Thereafter, an end portion of the 31B tape was detached and the end of the tape was pulled back at an angle of 180° relative to the stainless steel plate and at a peeling speed of 0.3 m/min, during which the force (N/25 mm) required for peeling was measured and reported as release force A.

As a blank, a 31B tape was attached to a Teflon® plate and pressed under a pressure of 20 g/cm² for 20 hours in a dryer at 70°C as described above. Then the 31B tape was peeled, and attached to a stainless steel (SUS 304) plate. The assembly was pressed by rolling back and forth a roller of 2 kg, and allowed to stand for 30 minutes. An end portion of the 31B tape was detached and the end of the tape was pulled back at an angle of 180° relative to the stainless steel plate and at a peeling speed of 0.3 m/min, during which the force (N/25 mm) required for peeling was measured and reported as release force B.

A residual adhesion rate (%) was determined by computing (A/B)×100.

### Coefficient of dynamic friction

A release sheet was prepared by forming a cured silicone film in a coating weight of 1.0 g/m² on a polyethylene laminated paper as in the release force test and aged at 25°C for one day. A weight of 200 g was secured to a polyethylene terephthalate (PET) film of 38 µm thick and rested on the cured silicone film surface of the release sheet such that the PET film faced the cured silicone film surface. Measurement was made by a tensile tester (model AGS-50G by Shimadzu Corp.) at a pulling speed of 130 mm/min. The coefficient of dynamic friction was determined as the force required for pulling divided by 200 g.

### Adhesion

The silicone release composition was coated onto a polyethylene laminated paper by a RI tester (IHI Machinery and Furnace Co., Ltd) and heated in a hot-air dryer at 140°C for 30 seconds, completing a release sheet having a cured silicone film with a coating weight of 1.0 g/m². After aging at 25°C for one day, the release sheet was taken out. The cured silicone film surface of the release sheet was rubbed with 10 back-and-forth strokes using a finger pad. The film was rated good "○" when the film was not stripped or peeled off and poor "×" when the film was stripped off.

### Pot life

After the silicone release composition was allowed to stand at 25°C for one day, it was rated good "○" when it did not discolor or thicken and poor "X" when it discolored, thickened or gelled.

### Example 1

A silicone release composition was prepared by combining 73.84 parts by weight of methylvinylpolysiloxane (1) and 26.16 parts by weight of methylvinylpolysiloxane (2) as component (A), 1.88 parts by weight of methylhydrogenpolysiloxane (5) and 0.55 part by weight of methylhydrogenpolysiloxane (6) as component (B), 1.5 parts by weight of high-molecular-weight linear organopolysiloxane (7) as component (C), 0.3 part by weight of 1-ethynyl-1-cyclohexanol and 0.13 part by weight of 1,1-dimethylpropynyloxytrimethylsilane as addition reaction inhibitor component (D), and 0.3 part by weight of (F) aryl-containing organopolysiloxane (10) and stirring them until uniform. A platinum-vinylsiloxane complex as addition reaction catalyst (E) was added to the mixture in such an amount as to give 100 ppm of platinum based on the total weight of components (A), (B), (C), (D), and (F). The resulting silicone release composition had a kinematic viscosity of 251 mm²/s.

### Example 2

A silicone release composition was prepared by combining 29.91 parts by weight of methylvinylpolysiloxane (1), 12.89 parts by weight of methylvinylpolysiloxane (2), and 57.19 parts by weight of methylvinylpolysiloxane (3) as component (A), 4.89 parts by weight of methylhydrogenpolysiloxane (5) and 0.55 part by weight of methylhydrogenpolysiloxane (6) as component (B), 1.5 parts by weight of high-molecular-weight linear organopolysiloxane (7) as component (C), 0.27 part by weight of 1-ethynyl-1-cyclohexanol and 0.19 part by weight of 1,1-dimethylpropynyloxytrimethylsilane as addition reaction inhibitor component (D), and 0.4 part by weight of (F) aryl-containing organopolysiloxane (10) and stirring them until uniform. A platinum-vinylsiloxane complex as addition reaction catalyst (E) was added to the mixture in such an amount as to give 100 ppm of platinum based on the total weight of components (A), (B), (C), (D), and (F). The resulting silicone release composition had a kinematic viscosity of 370 mm²/s.

### Example 3

A silicone release composition was prepared by combining 37.14 parts by weight of methylvinylpolysiloxane (1), 44.38 parts by weight of methylvinylpolysiloxane (2), and 14.00 parts by weight of methylvinylpolysiloxane (3) as component (A), 1.70 parts by weight of methylhydrogenpolysiloxane (5) and 2.90 parts by weight of methylhydrogenpolysiloxane (6) as component (B), 1.2 parts by weight of high-molecular-weight linear organopolysiloxane (8) and 3.0 parts by weight of high-molecular-weight linear organopolysiloxane (9) as component (C), and 0.25 part by weight of 1-ethynyl-1-cyclohexanol and 0.25 part by weight of 1,1-dimethylpropynyloxytrimethylsilane as addition reaction inhibitor component (D) and stirring them until uniform. A platinum-vinylsiloxane complex as addition reaction catalyst (E) was added to the mixture in such an amount as to give 100 ppm of platinum based on the total weight of components (A), (B), (C), and (D). The resulting silicone release composition had a kinematic viscosity of 298 mm²/s.

### Comparative Example 1

A silicone release composition was prepared by combining 73.84 parts by weight of methylvinylpolysiloxane (1) and 26.16 parts by weight of methylvinylpolysiloxane (2) as component (A), 2.20 parts by weight of methylhydrogenpolysiloxane (5) as component (B), 1.5 parts by weight of high-molecular-weight linear organopolysiloxane (7) as component (C), 0.3 part by weight of 1-ethynyl-1-cyclohexanol and 0.13 part by weight of 1,1-dimethylpropynyloxytrimethylsilane as addition reaction inhibitor component (D), and 0.3 part by weight of (F) aryl-containing organopolysiloxane (10) and stirring them until uniform. A platinum-vinylsiloxane complex as addition reaction catalyst (E) was added to the mixture in such an amount as to give 100 ppm of platinum based on the total weight of components (A), (B), (C), (D), and (F). The resulting silicone release composition had a kinematic viscosity of 253 mm²/s.

### Comparative Example 2

A silicone release composition was prepared by combining 73.84 parts by weight of methylvinylpolysiloxane (1) and 26.16 parts by weight of methylvinylpolysiloxane (2) as component (A), 3.72 parts by weight of methylhydrogenpolysiloxane (6) as component (B), 1.5 parts by weight of high-molecular-weight linear organopolysiloxane (7) as component (C), 0.3 part by weight of 1-ethynyl-1-cyclohexanol and 0.13 part by weight of 1,1-dimethylpropynyloxytrimethylsilane as addition reaction inhibitor component (D), and 0.3 part by weight of (F) aryl-containing organopolysiloxane (10) and stirring them until uniform. A platinum-vinylsiloxane complex as addition reaction catalyst (E) was added to the mixture in such an amount as to give 100 ppm of platinum based on the total weight of components (A), (B), (C), (D), and (F). The resulting silicone release composition had a kinematic viscosity of 248 mm²/s.

### Comparative Example 3

A silicone release composition was prepared by combining 100 parts by weight of methylvinylpolysiloxane (4) as component (A), 5.88 parts by weight of methylhydrogenpolysiloxane (5) and 1.72 parts by weight of methylhydrogenpolysiloxane (6) as component (B), 1.5 parts by weight of high-molecular-weight linear organopolysiloxane (7) as component (C), 0.3 part by weight of 1-ethynyl-1-cyclohexanol and 0.13 part by weight of 1,1-dimethylpropynyloxytrimethylsilane as addition reaction inhibitor component (D), and 0.3 part by weight of (F) aryl-containing organopolysiloxane (10) and stirring them until uniform. A platinum-vinylsiloxane complex as addition reaction catalyst (E) was added to the mixture in such an amount as to give 100 ppm of platinum based on the total weight of components (A), (B), (C), (D), and (F). The resulting silicone release composition had a kinematic viscosity of 64 mm²/s.

### Comparative Example 4

A silicone release composition was prepared by combining 73.84 parts by weight of methylvinylpolysiloxane (1) and 26.16 parts by weight of methylvinylpolysiloxane (2) as component (A), 1.88 parts by weight of methylhydrogenpolysiloxane (5) and 0.55 part by weight of methylhydrogenpolysiloxane (6) as component (B), 1.5 parts by weight of high-molecular-weight linear organopolysiloxane (7) as component (C), 0.3 part by weight of (F) aryl-containing organopolysiloxane (10), and a platinum-vinylsiloxane complex as addition reaction catalyst (E) in such an amount as to give 100 ppm of platinum based on the total weight of components (A), (B), (C), and (F). The silicone release composition had a kinematic viscosity of 259 mm²/s.

### Comparative Example 5

A silicone release composition was prepared by combining 73.84 parts by weight of methylvinylpolysiloxane (1) and 26.16 parts by weight of methylvinylpolysiloxane (2) as component (A), 1.88 parts by weight of methylhydrogenpolysiloxane (5) and 0.55 part by weight of methylhydrogenpolysiloxane (6) as component (B), 0.3 part by weight of 1-ethynyl-1-cyclohexanol and 0.13 part by weight of 1,1-dimethylpropynyloxytrimethylsilane as addition reaction inhibitor component (D), and 0.3 part by weight of (F) aryl-containing organopolysiloxane (10) and stirring them until uniform. A platinum-vinylsiloxane complex as addition reaction catalyst (E) was added to the mixture in such an amount as to give 100 ppm of platinum based on the total weight of components (A), (B), (D), and (F). The resulting silicone release composition had a kinematic viscosity of 209 mm²/s.

### Comparative Example 6

A silicone release composition was prepared by combining 100 parts by weight of methylvinylpolysiloxane (3) as component (A), 6.64 parts by weight of methylhydrogenpolysiloxane (5) and 1.94 parts by weight of methylhydrogenpolysiloxane (6) as component (B), 1.5 parts by weight of high-molecular-weight linear organopolysiloxane (7) as component (C), 0.3 part by weight of 1-ethynyl-1-cyclohexanol and 0.13 part by weight of 1,1-dimethylpropynyloxytrimethylsilane as addition reaction inhibitor component (D), and 0.3 part by weight of (F) aryl-containing organopolysiloxane (10) and stirring them until uniform. A platinum-vinylsiloxane complex as addition reaction catalyst (E) was added to the mixture in such an amount as to give 100 ppm of platinum based on the total weight of components (A), (B), (C), (D), and (F). The resulting silicone release composition had a kinematic viscosity of 210 mm²/s.

### Comparative Example 7

A silicone release composition was prepared by combining 73.84 parts by weight of methylvinylpolysiloxane (1) and 26.16 parts by weight of methylvinylpolysiloxane (2) as component (A), 2.20 parts by weight of methylhydrogenpolysiloxane (5) as component (B), 1.5 parts by weight of high-molecular-weight linear organopolysiloxane (7) as component (C), and 0.3 part by weight of 1-ethynyl-1-cyclohexanol and 0.13 part by weight of 1,1-dimethylpropynyloxytrimethylsilane as addition reaction inhibitor component (D) and stirring them until uniform. A platinum-vinylsiloxane complex as addition reaction catalyst (E) was added to the mixture in such an amount as to give 100 ppm of platinum based on the total weight of components (A), (B), (C), and (D). The resulting silicone release composition had a kinematic viscosity of 251 mm²/s.

### --- Ingredients used herein ---

### Methylvinylpolysiloxane (1)

A polysiloxane blocked with dimethylvinylsiloxy at molecular both ends, consisting of (CH₃)₂SiO units except both ends, having vinyl value 0.0166 mol/100 g and kinematic viscosity 450 mm²/s

{(CH₂=CH)(CH₃)₂SiO_{1/2}}₂{(CH₃)₂SiO}₁₆₀

### Methylvinylpolysiloxane (2)

A polysiloxane blocked with dimethylvinylsiloxy at molecular both ends, consisting of (CH₃)₂SiO units except both ends, having vinyl value 0.029 mol/100 g and kinematic viscosity 120 mm²/s

{(CH₂=CH)(CH₃)₂SiO_{1/2}}₂{(CH₃)₂SiO}₉₀

### Methylvinylpolysiloxane (3)

A polysiloxane blocked with trimethylsiloxy at molecular ends, based on a siloxane chain consisting of (CH₃)(CH₂=CH)SiO units and (CH₃)₂SiO units, and having vinyl value 0.07 mol/100 g and kinematic viscosity 97 mm²/s

{(CH₃)₃SiO_{1/2}}₂{(CH₃)₂SiO}₇₀{(CH₂=CH)(CH₃)SiO}₄

### Methylvinylpolysiloxane (4)

A polysiloxane blocked with dimethylvinylsiloxy at molecular ends, consisting of (CH₃)₂SiO units except both ends, having vinyl value 0.062 mol/100 g and kinematic viscosity 60 mm²/s

{(CH₂=CH)(CH₃)₂SiO_{1/2}}₂{(CH₃)₂SiO}₄₁

### Methylhydrogenpolysiloxane (5)

A methylhydrogenpolysiloxane blocked with trimethylsiloxy at molecular both ends, consisting of (CH₃)HSiO units except both ends, having SiH content 1.61 mol/100 g and kinematic viscosity 38 mm²/s

{(CH₃)₃SiO_{1/2}}₂{(CH₃)HSiO}₇₇

### Methylhydrogenpolysiloxane (6)

A methylhydrogenpolysiloxane blocked with trimethylsiloxy at molecular both ends, based on a siloxane chain consisting of (CH₃)HSiO units and (CH₃)₂SiO units in a ratio ((CH₃)HSiO units/(CH₃)₂SiO units) of 2.2/1, having SiH content 1.0 mol/100 g and kinematic viscosity 35 mm²/s

{(CH₃)₃SiO_{1/2}}₂{(CH₃)₂SiO}₁₂{(CH₃)HSiO}_{26.4}

### High-molecular-weight linear organopolysiloxane (7)

{HO(CH₃)₂SiO_{1/2}}₂{(CH₃)₂SiO_{2/2})}₁₆₀₀

### High-molecular-weight linear organopolysiloxane (8)

{HO(CH₃)₂SiO_{1/2}}₂{(CH₃)₂SiO_{2/2})}₂₀₀₀

### High-molecular-weight linear organopolysiloxane (9)

{HO(CH₃)₂SiO_{1/2}}₂{(CH₃)₂SiO_{2/2})}₄₀₀

### (F) Aryl-containing organopolysiloxane (10)

{(CH₃)₃SiO_{1/2}}₂{(CH₃)₂SiO}₄₀₀{Ph₂SiO}₂₁

Herein Ph is phenyl.

The silicone release compositions in Examples and Comparative Examples were evaluated for the aforementioned properties, with the results shown in Tables 1 and 2.

**Table 1**

| Component | Ingredient | Example | | |
|---|---|---|---|---|
| | | 1 | 2 | 3 |
| A | Methylvinylpolysiloxane (1) | 73.84 | 29.91 | 37.14 |
| | Methylvinylpolysiloxane (2) | 26.16 | 12.89 | 44.38 |
| | Methylvinylpolysiloxane (3) | - | 57.19 | 14.00 |
| | Methylvinylpolysiloxane (4) | - | - | - |
| B | Methylhydrogenpolysiloxane (5) | 1.88 | 4.89 | 1.70 |
| | Methylhydrogenpolysiloxane (6) | 0.55 | 0.55 | 2.90 |
| C | High-molecular-weight linear organopolysiloxane (7) | 1.5 | 1.5 | - |
| | High-molecular-weight linear organopolysiloxane (8) | - | - | 1.2 |
| | High-molecular-weight linear organopolysiloxane (9) | - | - | 3.0 |
| D | 1 -Ethynyl- 1 -cyclohexanol | 0.3 | 0.27 | 0.25 |
| | 1,1-Dimethylpropynyloxytrimethylsilane | 0.13 | 0.19 | 0.25 |
| E | Platinum-vinylsiloxane complex | 2 | 2 | 2 |
| F | Aryl-containing organopolysiloxane (10) | 0.3 | 0.4 | - |

| <Physical properties> | | | | |
|---|---|---|---|---|
| SiH value of component (B) (mol/100g) | | 0.0358 | 0.0842 | 0.0564 |
| Vinyl value of component (A) (mol/100g) | | 0.0198 | 0.0487 | 0.0288 |
| H/Vi ^{(*1)} | | 1.81 | 1.73 | 1.96 |
| Kinematic viscosity of silicone release composition (mm²/s) | | 251 | 236 | 298 |

| <Release properties> | | | | |
|---|---|---|---|---|
| Low-speed release force (N/5 cm) at 0.3 m/min | | 0.12 | 0.15 | 0.14 |
| High-speed release force (N/5 cm) at 60 m/min | | 0.38 | 0.30 | 0.32 |
| Residual adhesion rate (%) | | 90 | 88 | 100 |
| Coefficient of dynamic friction (against PET surface) | | 0.38 | 0.32 | 0.15 |
| Adhesion (after 1 day at 25°C) | | ○ | ○ | ○ |
| Pot life (after 1 day at 25°C) | | ○ | ○ | ○ |

| | | | | |
|---|---|---|---|---|
| (*1): the ratio of SiH groups in the composition to alkenyl groups in the composition | | | | |

**Table 2**

| Component | Ingredient | Comparative Example | | | | | | |
|---|---|---|---|---|---|---|---|---|
| | | 1 | 2 | 3 | 4 | 5 | 6 | 7 |
| A | Methylvinylpolysiloxane (1) | 73.84 | 73.84 | - | 73.84 | 73.84 | - | 73.84 |
| | Methylvinylpolysiloxane (2) | 26.16 | 26.16 | - | 26.16 | 26.16 | - | 26.16 |
| | Methylvinylpolysiloxane (3) | - | - | - | - | - | 100 | - |
| | Methylvinylpolysiloxane (4) | - | - | 100 | - | - | - | - |
| B | Methylhydrogenpolysiloxane (5) | 2.22 | - | 5.88 | 1.88 | 1.88 | 6.64 | 2.22 |
| | Methylhydrogenpolysiloxane (6) | - | 3.58 | 1.72 | 0.55 | 0.55 | 2.0 | - |
| C | High-molecular-weight linear organopolysiloxane (7) | 1.5 | 1.5 | 1.5 | 1.5 | - | 1.5 | 1.5 |
| D | 1-Ethynyl-1-cyclohexanol | 0.3 | 0.3 | 0.3 | - | 0.3 | 0.3 | 0.3 |
| | 1,1-Dimethylpropynyloxytrimethylsilane | 0.13 | 0.13 | 0.13 | - | 0.13 | 0.13 | 0.13 |
| E | Platinum-vinylsiloxane complex | 2 | 2 | 2 | 2 | 2 | 2 | 2 |
| F | Aryl-containing organopolysiloxane (10) | 0.3 | 0.3 | 0.3 | 0.3 | 0.3 | 0.3 | - |

| Physical properties | | | | | | | | |
|---|---|---|---|---|---|---|---|---|
| SiH value of component (B) (mol/100g) | | 0.0358 | 0.0358 | 0.1119 | 0.0358 | 0.0358 | 0.1269 | 0.0358 |
| Vinyl value of component (A) (mol/100g) | | 0.0198 | 0.0198 | 0.062 | 0.0198 | 0.0198 | 0.070 | 0.0198 |
| H/Vi ^{(*1)} | | 1.81 | 1.81 | 1.81 | 1.81 | 1.81 | 1.81 | 1.81 |
| Kinematic viscosity of silicone release composition (mm²/s) | | 253 | 248 | 75 | 259 | 209 | 210 | 251 |

| Release properties | | | | | | | | |
|---|---|---|---|---|---|---|---|---|
| Low-speed release force (N/5 cm) at 0.3 m/min | | 0.11 | 0.18 | 0.54 | 1.25 | 0.15 | 0.62 | 0.16 |
| High-speed release force (N/5 cm) at 60 m/min | | 0.58 | 0.29 | 0.67 | 2.44 | 0.52 | 0.68 | 0.74 |
| Residual adhesion rate (%) | | 85 | 90 | 91 | 67 | 92 | 93 | 95 |
| Coefficient of dynamic friction (against PET surface) | | 0.51 | 0.55 | 0.88 | 1.12 | 0.61 | 0.28 | 0.66 |
| Adhesion (after 1 day at 25°C) | | ○ | × | ○ | × | ○ | ○ | ○ |
| Pot life (after 1 day at 25°C) | | ○ | ○ | ○ | × | ○ | ○ | ○ |

## Claims

1. A solventless curable silicone release composition comprising at least components (A), (B), (C), (D), and (E):
(A) 100 parts by weight of organopolysiloxane containing at least two alkenyl groups per molecule and having a vinyl value of 0.016 mol/100 g to 0.05 mol/100 g and a kinematic viscosity at 25°C of 80 mm²/s to 450 mm²/s,
(B) 2 to 8 parts by weight of an organohydrogenpolysiloxane mixture of (B-1) organohydrogenpolysiloxane having the average compositional formula (1) and (B-2) organohydrogenpolysiloxane having the average compositional formula (2), in a weight ratio (B-1):(B-2) of from 100:5 to 100:200, the mixture containing 0.016 mol/100 g to 0.5 mol/100 g of silicon-bonded hydrogen,
M_{α}M^{H}_{β}D^{H}_{γ}T_{δ}Q_{ε} (1)
wherein M is R₃SiO_{1/2}, M^{H} is R₂HSiO_{1/2}, D^{H} is RHSiO_{2/2}, T is RSiO_{3/2}, Q is SiO_{4/2}, each R is independently a C₁-C₁₂ substituted or unsubstituted monovalent hydrocarbon group free of aliphatic unsaturation, α and β are each independently 0 or a positive number, 2 ≤ α+β, and γ, δ, and ε are numbers in the ranges 10 ≤ γ ≤ 100, 0 ≤ δ ≤ 10, and 0 ≤ ε ≤ 10,
M_{α}M^{H}_{β}D^{H}_{ζ}D_{η}T_{δ}Q_{ε} (2)
wherein M is R₃SiO_{1/2}, M^{H} is R₂HSiO_{1/2}, D^{H} is RHSiO_{2/2}, D is R₂SiO_{2/2}, T is RSiO_{3/2}, Q is SiO_{4/2}, R is each independently a C₁-C₁₂ substituted or unsubstituted monovalent hydrocarbon group free of aliphatic unsaturation, α and β are each independently 0 or a positive number, 2 ≤ α+β, and ζ, η, δ, and ε are numbers in the ranges 5 ≤ ζ ≤ 60, 10 ≤ η ≤ 50, 0 ≤ δ ≤ 10 and 0 ≤ ε ≤ 10,
(C) 0.1 to 20 parts by weight of high-molecular-weight linear organopolysiloxane having the general formula (3):
M¹₂D_{θ} (3)
wherein M¹ is R¹₃SiO_{1/2}, D is R₂SiO_{2/2}, each R is independently a C₁-C₁₂ substituted or unsubstituted monovalent hydrocarbon group free of aliphatic unsaturation, R¹ is a C₁-C₁₂ substituted or unsubstituted monovalent hydrocarbon group free of aliphatic unsaturation or a hydroxyl group, and θ is a positive number of 300 to 3,000,
(D) an effective amount of addition reaction inhibitor, and
(E) an effective amount of addition reaction catalyst.

2. Solventless curable silicone release composition of claim 1 wherein component (A) is organopolysiloxane having the average compositional formula (4):
M_{ι}M^{Vi}_{κ}D_{λ}D^{Vi}_{µ} (4)
wherein M is R₃SiO_{1/2}, M^{Vi} is R₂PSiO_{1/2}, D is R₂SiO_{2/2}, D^{Vi} is RPSiO_{2/2}, each R independently is a C₁-C₁₂ substituted or unsubstituted monovalent hydrocarbon group free of aliphatic unsaturation, P is an alkenyl group of the formula -(CH₂)ₐ-CH=CH₂ wherein a is an integer of 0 to 6, and t, κ, λ, and µ are numbers in the ranges 0 ≤ ι ≤ 2, 0 ≤ κ ≤ 2, ι+κ = 2, 10 ≤ λ ≤ 300 and 0 ≤ µ ≤ 10.

3. Solventless curable silicone release composition of claim 1 or 2 wherein component (B-1) is organohydrogenpolysiloxane having the average compositional formula (5):
M_{α}M^{H}_{β}D^{H}_{γ} (5)
wherein M is R₃SiO_{1/2}, M^{H} is R₂HSiO_{1/2}, D^{H} is RHSiO_{2/2}, each R independently is a C₁-C₁₂ substituted or unsubstituted monovalent hydrocarbon group free of aliphatic unsaturation, α and β are each independently 0 or a positive number, 2 ≤ α+β, γ is a positive number in the range 10 ≤ γ ≤ 100, and component (B-2) is organohydrogenpolysiloxane having the average compositional formula (6):
M_{α}M^{H}_{β}D^{H}_{ζ}D_{η} (6)
wherein M is R₃SiO_{1/2}, M^{H} is R₂HSiO_{1/2}, D^{H} is RHSiO_{2/2}, D is R₂SiO_{2/2}, each R independently is a C₁-C₁₂ substituted or unsubstituted monovalent hydrocarbon group free of aliphatic unsaturation, α and β are each independently 0 or a positive number, 2 ≤ α+β, and ζ and η are positive numbers in the ranges 5 ≤ ζ ≤ 60 and 10 ≤ η ≤ 50.

4. Solventless curable silicone release composition of any one of claims 1 to 3, further comprising (F) aryl-containing organopolysiloxane having the general formula (8) in an amount of 0.1 to 5 parts by weight per 100 parts by weight of component (A), 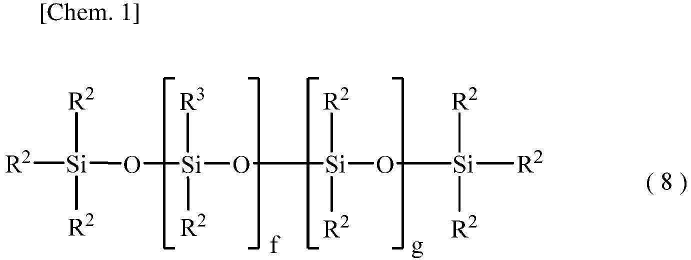 wherein each R² independently is a C₁-C₁₂ substituted or unsubstituted, saturated aliphatic monovalent hydrocarbon group, R³ is an aryl group, f is an integer of 1 to 30, g is an integer of 5 to 400, and R³/(R²+R³) is 1 to 25 mol%.

5. Solventless curable silicone release composition of any one of claims 1 to 4 wherein a sample of 5 cm × 23 cm, which is prepared by coating the composition onto a polyethylene laminated paper sheet at a coating weight of 0.8 to 1.2 g/m², heat curing the composition at 140°C for 30 seconds to form a cured film of the composition, coating an emulsion type acrylic adhesive PW-6111A as a pressure-sensitive adhesive onto the surface of the cured film, drying the adhesive at 100°C for 180 seconds, and attaching a wood-free paper sheet thereto, shows a low-speed release force (0.3 m/min, 180° peel) of 0.01 to 0.2 N/5 cm and a high-speed release force (60 m/min, 180° peel) of 0.1 to 0.5 N/5 cm after the sample is aged at 25°C for 20 hours.

6. A release sheet comprising a sheet-like substrate and a cured film of a solventless curable silicone release composition of any one of claims 1 to 5 disposed on one surface of the substrate.
